(19) Europäisches Patentamt
European Patent Office
Office européen des brevets

(11) **EP 4 228 143 B1**

(12) **EUROPEAN PATENT SPECIFICATION**

(45) Date of publication and mention
of the grant of the patent:
**02.04.2025 Bulletin 2025/14**

(21) Application number: **22155947.9**

(22) Date of filing: **09.02.2022**

(51) International Patent Classification (IPC):
**H02M 7/5387** (2007.01)    **H02P 23/14** (2006.01)

(52) Cooperative Patent Classification (CPC):
**H02M 7/53876; H02P 23/14**

(54) **METHOD, COMPUTER PROGRAM, AND CONTROLLER FOR CONTROLLING AN ELECTRICAL CONVERTER, ELECTRICAL CONVERTER, AND COMPUTER-READABLE MEDIUM**

VERFAHREN, COMPUTERPROGRAMM UND STEUERGERÄT ZUR STEUERUNG EINES ELEKTRISCHEN WANDLERS, ELEKTRISCHER WANDLER UND COMPUTERLESBARES MEDIUM

PROCÉDÉ, PROGRAMME INFORMATIQUE ET DISPOSITIF DE COMMANDE POUR COMMANDER UN CONVERTISSEUR ÉLECTRIQUE, CONVERTISSEUR ÉLECTRIQUE, ET SUPPORT LISIBLE SUR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2023 Bulletin 2023/33**

(73) Proprietor: **ABB SCHWEIZ AG**
**5400 Baden (CH)**

(72) Inventors:
• **DARIVIANAKIS, Georgios**
**8046 Zürich (CH)**
• **GEYER, Tobias**
**5408 Ennetbaden (CH)**
• **MUSZYNSKI, Peter**
**07910 Loviisa (FI)**
• **TSOUMAS, Ioannis**
**8032 Zürich (CH)**

(74) Representative: **Sykora & König Patentanwälte PartG mbB**
**Maximilianstraße 2**
**80539 München (DE)**

(56) References cited:
**EP-A1- 2 469 692**      **EP-B1- 2 891 241**
**US-A1- 2020 350 847**

• **TOBIAS GEYER ET AL: "Model Predictive Pulse Pattern Control", IEEE TRANSACTIONS ON INDUSTRY APPLICATIONS, IEEE SERVICE CENTER, PISCATAWAY, NJ, US, vol. 48, no. 2, 1 March 2012 (2012-03-01), pages 663 - 676, XP011434186, ISSN: 0093-9994, DOI: 10.1109/ TIA.2011.2181289**
• **NIKOLAOS OIKONOMOU ET AL: "Model Predictive Pulse Pattern Control for the Five-Level Active Neutral-Point-Clamped Inverter", IEEE TRANSACTIONS ON INDUSTRY APPLICATIONS., vol. 49, no. 6, 1 November 2013 (2013-11-01), US, pages 2583 - 2592, XP055471617, ISSN: 0093-9994, DOI: 10.1109/ TIA.2013.2263273**

## Description

FIELD OF THE INVENTION

The invention relates to the field of high-power electronics. In particular, the invention relates to a method, a computer program, and a controller for controlling an electrical converter, and to an electrical converter and a computer-readable medium, on which the computer program may be stored.

BACKGROUND OF THE INVENTION

Optimized pulse patterns (OPPs) relate to a specific pulse width modulation method. Offline computed and optimized pulse patterns may be used for modulating the semiconductor switches in an electrical converter. Based on the actual speed and flux reference (provided for example by an outer control loop), a controller may determine a best suited offline computed pulse pattern, which then may be applied to the semiconductor switches of the electrical converter. Offline computed optimized pulse patterns may allow the minimization of the overall current distortion for a given switching frequency.

When the electrical converter is used for driving an electrical machine, the harmonic losses in the stator winding of the electrical machine may be proportional to the current distortion, while the switching losses of the power inverter may be related to the switching frequency. In a grid-connected converter setting, stringent standards may be imposed on the voltage and current distortions a converter may inject into the grid. Traditionally, it has only been possible to use optimized pulse patterns in a modulator driven by a very slow control loop. This may lead to very long transients and to harmonic excursions of the currents when changing the operating point.

EP 2 469 692 A1 describes a control method that combines the merits of direct torque control and optimized pulse patterns, by manipulating in real time the switching instants of the pre-computed optimized pulse patterns, so as to achieve fast closed-loop control. This so-called model predictive pulse pattern controller (MP$^3$C) may address in a unified approach the tasks of the inner current control loop and modulator. MP$^3$C may control a flux vector, which, in case of an electrical converter driving an electrical machine, is typically the stator flux linkage vector of the electrical machine. For grid-connected converters, the virtual converter flux may constitute the flux vector.

Patent document US 2020 / 350847 A1 discloses as nearest prior art a converter system supplying an electrical machine, in which a stator flux vector is estimated based on the measured stator current vector and the stator voltage. An operating point specific optimized pulse pattern for the converter is provided, and a stator flux reference angle is determined. A flux reference generator determines a stator flux reference from the optimized pulse pattern and the stator flux reference angle. A difference between the reference stator flux vector and the estimated stator flux vector is determined, and the switching pattern is manipulated to reduce this stator flux error, before applying it to the electrical converter.

Non-patent documents "Model Predictive Pulse Pattern Control" (Tobias Geyer et al, IEEE Transactions on industry applications, vol. 48, no. 2, 1 March 2012, pages 663-676, ISSN: 0093-9994, DOI: 10.1109/TIA.2011.2181289) and "Model Predictive Pulse Pattern Control for the Five-Level Active Neutral-Point-Clamped Inverter" (Nikolaos Oikonomou et al, IEEE Transactions on industry applications vol. 49, no. 6, 1 November 2013, pages 2583-2592, ISSN: 0093-9994, DOI: 10.1109/TIA.2013.2263273) disclose model predictive pulse pattern controller (MP 3C) for high-power converters driving an electrical machine using optimized pulse patterns.

MP$^3$C achieves short response times during transients, and a good rejection of disturbances. At steady-state operating conditions, due to the usage of optimized pulse patterns, a nearly optimal ratio of harmonic current distortions per switching frequency may be obtained. Compared to state-of-the-art trajectory controllers, MP$^3$C may provide two advantages. First, a complicated observer structure to reconstruct the fundamental quantities may not be required. Instead, a flux space vector, which may be the controlled variable, may be estimated directly by sampling the currents and the DC-link voltage at regular sampling intervals. Second, by formulating an optimal control problem and using a receding horizon policy, the sensitivity to flux observer noise may be greatly reduced.

During transient operation, such as reference step or ramp changes, large disturbances and faults, the controlled variables, such as currents, electromagnetic torque and flux linkage, are typically required to change in a step-like fashion or they may have to follow a steep ramp. Examples may include fast torque steps in high performance drives and power steps in low-voltage ride through operation.

In MP$^3$C, closed-loop control may be achieved by modifying the switching instants of the optimized pulse patterns' switching transitions in real time. More specifically, the switching transitions are modified in time such that the flux error may be removed at a future time instant. Note that in optimized pulse patterns, the switching transitions are not evenly distributed in time. At very low switching frequencies, long time intervals may arise between two switching transitions. When a reference step is applied at the beginning of such a time interval, a significant amount of time may elapse before the controlled variables start to change, resulting in a long initial time delay and also prolonging the settling time.

Once the controlled variable has started to change, the transient response may be sluggish and significantly slower than when using deadbeat control or direct torque control, for example. The sluggish response is typically due to the absence of a suitable voltage vector that moves the controlled flux vector with the maximum speed and in the direction that ensures the fastest possible compensation of the torque or current error. In order to ensure a very fast transient response during a transient, at least one phase may need to be connected to the upper or lower DC-link rail of the converter. In a low-voltage ride through setting, for example, this may imply reversing the voltage in at least one phase from its maximal to its minimal value, or vice versa, during a major part of the transient.

Directly related to the behaviour of sluggish transient responses is the issue of current excursions during transients. Such excursions may occur when the switching transitions, which are to be shifted in time so as to remove the flux error, are spread over a long time interval. This may increase the risk that the flux vector is not moved along the shortest path from its current to its new desired position. Instead, the flux vector may temporarily deviate from this path, exceeding its nominal magnitude. This may be equivalent to a large current, which may result in an over-current trip.

Related issues may also arise at quasi steady-state operating conditions, where small variations in the operating point and/or the inverter voltages occur. Specifically, fluctuations in the DC-link voltage, resistive voltage drops in the machine's stator windings or in the grid impedance and transitions between different pulse patterns may lead to a degradation of the closed-loop performance of MP$^3$C, if they are not properly accounted for.

Particularly in cases, where the optimized pulse patterns' switching transitions exhibit an uneven distribution in time and when a very low switching frequency is used, these flux errors may not be accounted for in a timely fashion due to the absence of suitable switching transitions. As a result, large flux errors may arise that build up and persist over significant periods of time, leading to a poor tracking of the optimized pulse pattern's optimal flux trajectory. This may impact the total harmonic distortion of the current in a detrimental way.

With respect to the above problems, EP 2 891 241 B1 describes a method for using MP$^3$C for drive systems, which has been proven a reliable method to regulate the rotor speed. In particular, EP 2 891 241 B1 describes a manipulation of the switching instants of the offline computed OPP in real time. However, to achieve so, the method and in particular MP$^3$C relies on knowledge of the machine type and its parameters, and an accurate online estimation of the rotor flux. So, in order to be able to use MP$^3$C, the machine type and its parameters had to be known and an accurate online estimation of the rotor flux had to be carried out. Thus, the machine type and its parameters had to be known when the controller for controlling the electrical machine is produced. So, it was not possible to produce and/or program a generally usable controller which may work for different machine types, wherein at least some of these different machine types were not known at the time of the production and/or, respectively programming of the controller. Moreover, some machine parameters may not be known or available at the time of commissioning of the converter drive system, and/or they may be time varying. In addition, accurately estimating the rotor flux online may require large processing resources and/or a relatively long time.

DESCRIPTION OF THE INVENTION

It is an object of the invention to overcome the above-mentioned problems. In particular, it is an object of the present invention to provide a method for controlling an electrical converter for driving an electrical machine, wherein the method may be carried out without any knowledge about the machine type of the electrical machine and its parameters, wherein the method is quick to commission, wherein the method only requires few processing resources, and/or wherein the method may be carried out quickly. Further, it is an object of the present invention to provide a corresponding computer program, a corresponding controller for controlling an electrical converter, a corresponding an electrical converter, and a corresponding computer-readable medium.

These objects are achieved by the subject-matter of the independent claims. Further exemplary embodiments are evident from the dependent claims and the following description.

An aspect relates to a method for controlling an electrical converter for driving an electrical machine. The electrical converter may be an inverter or an active rectifier. It may be an indirect or a direct converter. In particular, the converter may be a high-power converter adapted for converting current with more than 100 A and/or 1000 V. The electrical machine may be an electric motor or a generator, or it may be operated as an electric motor in a first operation mode and as a generator in a second operation mode.

According to an embodiment of the invention, the method comprises the steps of: estimating a stator flux vector depending on at least one measurement in the electrical converter; determining an optimized pulse pattern for the electrical converter depending on a reference angular stator frequency; determining a reference stator angle of the stator flux vector depending on the reference angular stator frequency; determining a reference stator flux vector depending on the optimized pulse pattern and the reference stator angle; determining a difference between the reference stator flux vector and the estimated stator flux vector; modifying switching instants of the optimized pulse pattern, such that the difference is minimized; and applying at least a part of the modified optimized pulse pattern to the electrical converter.

This enables one to drive the electrical machine without knowing the machine type of the electrical machine and its parameters. Further, no online estimation of the rotor flux has to be carried out. Thus, the machine type and its parameters do not have to be known when the controller for carrying out the method is produced. So, the above method enables one to produce and/or program a generally usable controller which may work for different machine types, wherein at least some of these different machine types are not known at the time of the production and/or, respectively programming of the controller. In addition, no large processing resources and/or relatively long processing times are required for accurately estimating the rotor flux online.

The above method provides a Model-Free Scalar Pulse Pattern Control (MF-SPPC) scheme. The MF-SPPC scheme may be a scalar closed-loop control scheme that achieves speed-control of an electrical machine by regulating a magnitude of the stator flux to its reference value, the reference stator flux magnitude, during transient events and in the presence of disturbances in a dc-link voltage of the electrical system comprising the electrical converter and the electrical machine. This task may be achieved for a given and/or predetermined reference angular stator frequency (or speed). By adjusting the reference angular stator frequency, a steady state value of an angular rotor speed may also be adjusted. In case of the electrical machine being an induction machine, the angular rotor speed will only approximate the reference angular stator frequency at steady state due to a slip between the rotor and the stator of the electrical machine. In case of a Permanent Magnet Synchronous Machine (PMSM), the angular rotor speed will eventually converge to the reference angular stator frequency at steady state due to a synchronism in the rotor and stator magnetic fields. Special care may be needed when adjusting the angular stator frequency not to drive the PMSM out of its synchronization. In this context, the MF-SPPC scheme may be seen as a bare bone control scheme based on OPPs which does not rely on any knowledge of the machine type and its parameters to achieve its control objectives.

The stator flux vector may be referred to as stator flux linkage vector.

According to an embodiment, the reference stator angle is determined by integrating the reference angular stator frequency. The reference stator angle may be determined by a proportional-integral (PI) controller which receives the reference angular stator frequency as an input.

According to an embodiment, the optimized pulse pattern is be determined depending on the reference stator flux magnitude. The reference stator flux magnitude may be set to "1" during nominal operation. Values below 1 may be used for induction machines operating at speeds exceeding its field-weakening point, so called field weakening. The fundamental component may determine a modulation index of the optimized pulse pattern.

According to an embodiment, the optimized pulse pattern is determined depending on a modulation index and/or a maximum allowed switching frequency. The modulation index may be determined depending on a reference stator flux magnitude. The maximum allowed switching frequency may be determined in advance, e.g. empirically, e.g. by a manufacturer of the electrical converter and/or the controller.

According to an embodiment, the at least one measurement in the electrical converter comprises measuring a stator voltage of the electrical converter. The stator flux vector may be estimated depending on the stator voltage.

According to an embodiment, the optimized pulse pattern comprises a sequence of switching transitions at switching instants between different switching states of the converter. The optimized pulse pattern may be loaded from a table of optimized pulse patterns stored in the controller performing the above method. The table of optimized pulse patterns may be indexed with respect to the modulation index. Optionally, the table of optimized pulse patterns may be indexed with respect to the maximal switching frequency. For each optimized pulse pattern in the table, switching transitions at switching instants may be stored. Optionally, for each optimized pulse pattern in the table a reference stator flux may be stored.

Another aspect relates to a computer program, which when being executed on a processor, e.g. a processor of the controller, is adapted for executing the steps of the above method.

Another aspect relates to a computer-readable medium in which the computer program is stored. The computer-readable medium may be a floppy disk, a hard disk, an USB (Universal Serial Bus) storage device, a RAM (Random Access Memory), a ROM (Read Only Memory), and an EPROM (Erasable Programmable Read Only Memory). The computer-readable medium may also be a data communication network, e.g. the Internet, which allows downloading a program code.

Another aspect relates to a controller for controlling the electrical converter adapted for executing the steps of the above method. For example, the control method, i.e. the above method, may be implemented on any computational hardware including DSPs, FPGAs, microcontrollers, CPUs, GPUs, multi-core platforms, and combinations thereof. In particular, the controller may comprise a memory in which the above-mentioned computer program is stored and may comprise the processor for executing the computer program.

Another aspect relates to an electrical converter, comprising a plurality of semiconductor switches and the above controller adapted for controlling the semiconductor switches of the electrical converter. The converter may be any multi-level power converter, such as a two-level converter, a three-level converter, a neutral point clamped three-level converter, a flying-capacitor four-level converter, a five-level converter, a cascaded H-bridge five-level converter, a modular multi-level converter, etc.

The electrical converter may be used on the machine side and/or on the grid side. For example, on the machine side case, the controller may control the electrical machine's stator flux vector along a pre-defined and optimal trajectory. A sine filter with inductive and capacitive elements and/or a long cable may be present between the electrical converter and the electrical machine. The controlled variables may comprise the electromagnetic torque and/or the magnitudes of the stator flux vectors. In the grid side case, the electrically converter may be connected via a sine filter and/or a transformer to the grid. The electrical converter's virtual flux vector may be controlled along a given trajectory by manipulating the converter switches. The controlled variables may comprise the real and/or the reactive power and/or the converter currents and/or the virtual converter flux.

It has to be understood that features of the method as described in the above and in the following may be features of the computer program, the computer-readable medium, the controller, and/or the electrical converter as described in the above and in the following.

These and other aspects of the invention will be apparent from and elucidated with reference to the embodiments described hereinafter.

BRIEF DESCRIPTION OF THE DRAWINGS

The subject-matter of the invention will be explained in more detail in the following text, with reference to exemplary embodiments which are illustrated in the attached drawings.

Fig. 1 shows a circuit representation of an induction machine model in a rotating dq-reference frame for a d-axis.

Fig. 2 shows a circuit representation of an induction machine model in the rotating dq-reference frame of figure 1 for a q-axis.

Fig. 3 illustrates a definition of the rotating dq-reference frame of figures 1 and 2.

Fig. 4 shows a circuit representation of a permanent-magnet synchronous machine in the rotating dq-reference frame of figure 3 for a d-axis.

Fig. 5 shows a circuit representation of a permanent-magnet synchronous machine in the rotating dq-reference frame of figure 3 for a q-axis.

Fig. 6 shows an example of a switching pattern modification by MP$^3$C.

Fig. 7 schematically shows an electrical system with a converter according to an embodiment of the invention.

Fig. 8 shows a flow diagram of an exemplary embodiment of a method for controlling an electrical converter for driving an electrical machine.

The reference symbols used in the drawings and their meanings are listed in the summary form in the list of reference symbols. In principle, identical parts are provided with the same reference symbols in the figures.

DETAILED DESCRIPTION OF EXEMPLARY EMBODIMENTS

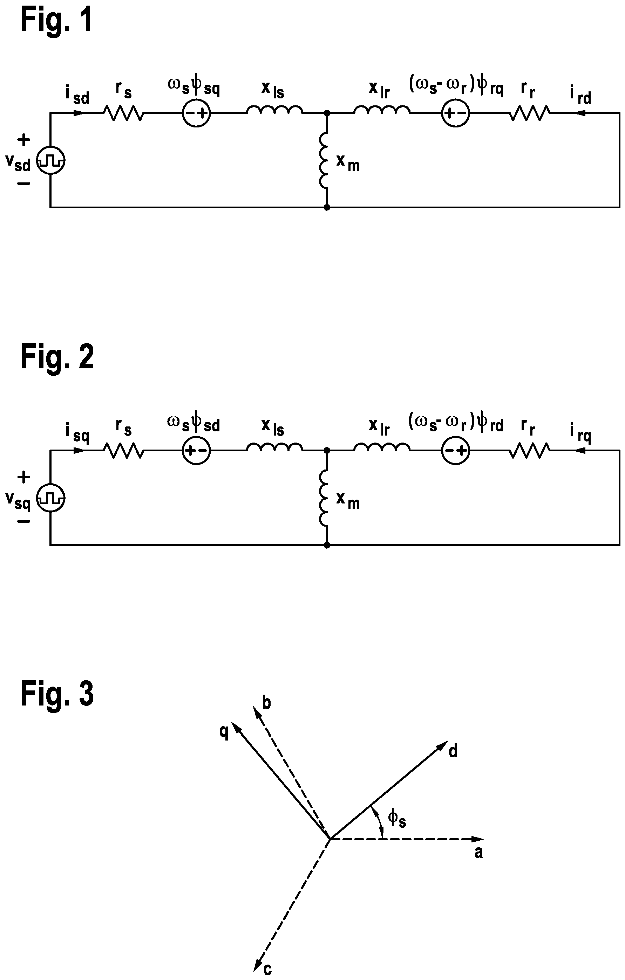

Fig. 1 shows a circuit representation of an induction machine model in a rotating dq-reference frame for a d-axis.

Fig. 2 shows a circuit representation of an induction machine model in the rotating dq-reference frame of figure 1 for a q-axis.

Fig. 3 illustrates a definition of the rotating dq-reference frame of figures 1 and 2.

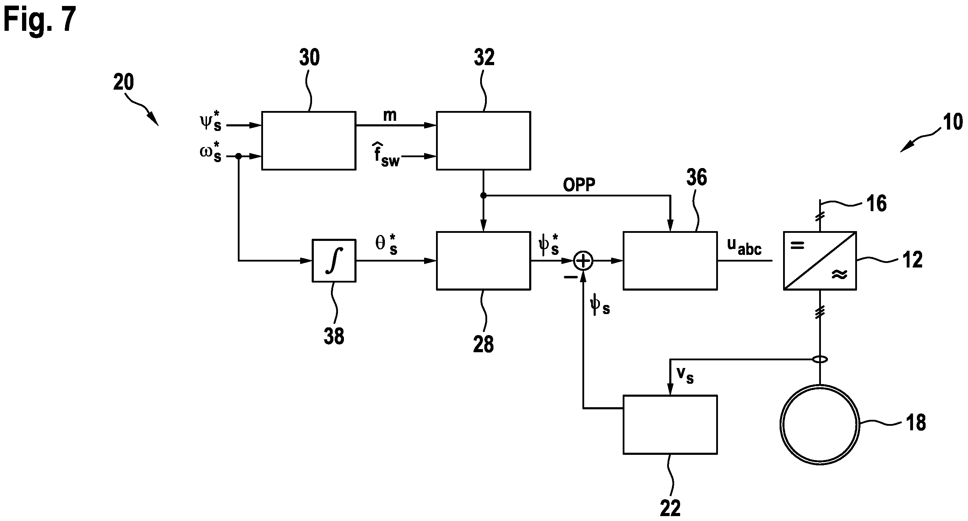

The dq-reference frame rotates with the angular stator frequency $\omega_s$, with its d-axis position denoted by $\varphi_s$. An electrical angular rotor speed is $\omega_r = p\omega_m$, where $p$ is a number of pole pairs of an electrical machine 18 (see figure 7) and $\omega_m$ is a mechanical angular speed of the rotor and shaft of the electrical machine 18. By principle of operation, $\omega_r \neq \omega_s$ due to a slip of the electrical machine 18. A stator voltage $v_s$ is given by $\boldsymbol{v_s} = [\boldsymbol{v_{sd}}, \boldsymbol{v_{sq}}]^T$, a stator (rotor) current $i_s$ ($i_r$) is given by $\boldsymbol{i_s} = [\boldsymbol{i_{sd}}, \boldsymbol{i_{sq}}]^T$ ($\boldsymbol{i_r} = [\boldsymbol{i_{rd}}, \boldsymbol{i_{rq}}]^T$), and a stator (rotor) flux vector $\psi_s$ ($\psi_r$) is given by $\boldsymbol{\psi_s} = [\boldsymbol{\psi_{sd}}, \boldsymbol{\psi_{sq}}]^T$ ($\boldsymbol{\psi_r} = [\boldsymbol{\psi_{rd}}, \boldsymbol{\psi_{rq}}]^T$). The stator (rotor) flux vector $\boldsymbol{\psi_s}$ ($\boldsymbol{\psi_r}$) may be referred to as stator (rotor) flux linkage vector. A stator (rotor) winding resistance $R_s$ ($R_r$) is denoted by $R_s = diag(r_s, r_s)$ ($R_r = diag(r_r, r_r)$), a magnetizing reactance $X_m$ is denoted by $X_m = diag(x_m, x_m)$ and a stator (rotor) leakage reactance $X_{ls}$ ($X_{lr}$) is denoted by $X_{ls} = diag(x_{ls}, x_{ls})$ ($X_{lr} = diag(x_{lr}, x_{lr})$). All quantities, including time t, are normalized in a per unit (p.u.) system.

Using Kirchoff's voltage law, the stator (rotor) voltage $v_s$ ($v_r$) is given by

$$v_s = R_s i_s + \frac{d\psi_s}{dt} + \omega_s \begin{bmatrix} 0 & -1 \\ 1 & 0 \end{bmatrix} \psi_s,$$

$$v_r = R_r i_r + \frac{d\psi_r}{dt} + (\omega_s - \omega_r) \begin{bmatrix} 0 & -1 \\ 1 & 0 \end{bmatrix} \psi_r. \tag{1}$$

Here, the inverter voltage applied to the stator is given by

$$v_s = \begin{bmatrix} v_{sd} \\ v_{sq} \end{bmatrix} = P(\phi_s) v_{abc} \tag{2}$$

where

$$P(\phi_s) = \frac{2}{3} \begin{bmatrix} \cos(\phi_s) & \cos(\phi_s - \frac{2\pi}{3}) & \cos(\phi_s + \frac{2\pi}{3}) \\ -\sin(\phi_s) & -\sin(\phi_s - \frac{2\pi}{3}) & -\sin(\phi_s + \frac{2\pi}{3}) \end{bmatrix} \tag{3}$$

is the matrix used to transform quantities from an abc-reference frame into the dq-reference frame. The stator and rotor flux vectors $\psi_s$, $\psi_r$ are given by

$$\psi_s = X_s i_s + X_m i_r$$

$$\psi_r = X_r i_r + X_m i_s \tag{4}$$

where $X_s = X_{ls} + X_m$ and $X_r = X_{lr} + X_m$ are the stator and, respectively, rotor linkage reactances $X_s$, $X_r$. An electromagnetic torque $T_e$ of the electrical machine 18 is given by

$$T_e = \frac{1}{\mathrm{pf}} \psi_s \times i_s \tag{5}$$

where pf is a power factor. Using formula (4), formula (5) may be written as

$$T_e = \frac{1}{\mathrm{pf}} \frac{x_m}{x_s x_r - x_m^2} \psi_r \times \psi_s$$

$$= \frac{1}{\mathrm{pf}} \frac{x_m}{x_s x_r - x_m^2} \|\psi_s\| \|\psi_r\| \sin(\gamma) \tag{6}$$

where y is an angle between stator and rotor flux linkage vectors $\psi_s$, $\psi_r$.

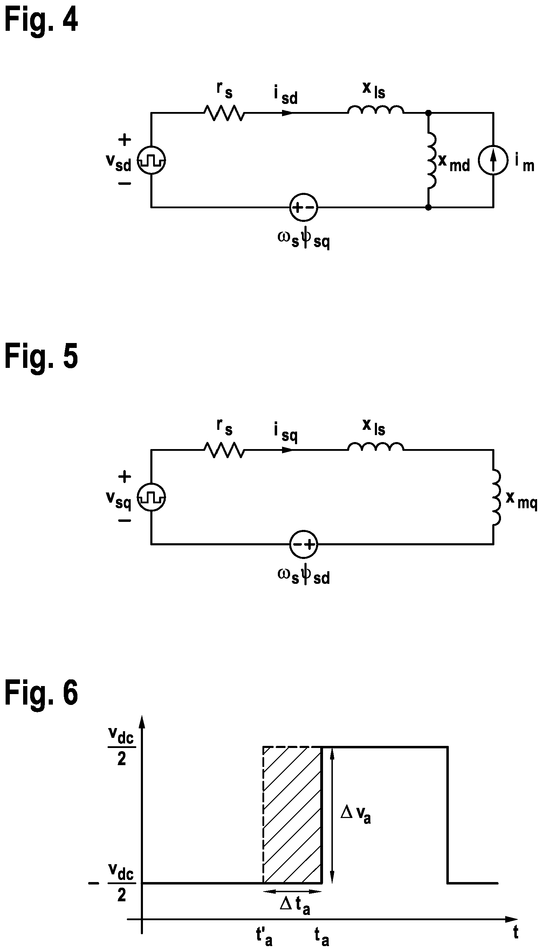

Fig. 4 shows a circuit representation of a permanent-magnet synchronous machine in the rotating dq-reference frame of figure 3 for a d-axis.

Fig. 5 shows a circuit representation of a permanent-magnet synchronous machine (PMSM) in the rotating dq-reference frame of figure 3 for a q-axis.

The dq-reference frame rotates with the angular stator speed $\omega_s$. By principle of operation, $\omega_s = \omega_r$. It may be assumed that the d-axis is aligned with the orientation of the permanent magnet mounted on the rotor of the PMSM. Hence, the rotor flux vector $\psi_r$ is given by

$$\psi_r = \begin{bmatrix} \psi_{rd} \\ \psi_{rq} \end{bmatrix} = \begin{bmatrix} x_{md}i_m \\ 0 \end{bmatrix} = \begin{bmatrix} \Psi_{PM} \\ 0 \end{bmatrix} \qquad (7)$$

where $i_m$ is a hypothetical constant magnetization current flowing through the magnetizing inductance $x_{md}$. A constant magnetic flux linkage is denoted by $\Psi_{PM}$ and is generated by a permanent magnet of the electrical machine 18. The stator flux vector $\psi_s$ is given by

$$\psi_s = X_s i_s + \psi_r. \qquad (8)$$

Applying Kirchoff's voltage law, the dynamics of the stator voltage $v_s$ are given by

$$v_s = R_s i_s + \frac{d\psi_s}{dt} + \omega_s \begin{bmatrix} 0 & -1 \\ 1 & 0 \end{bmatrix} \psi_s. \qquad (9)$$

The electromagnetic torque $T_e$ is given by

$$\begin{aligned} T_e &= \frac{1}{\mathrm{pf}} \psi_s \times i_s \\ &= \frac{1}{\mathrm{pf}} \psi_s \times X_s^{-1}(\psi_s - \psi_r) \\ &= \frac{1}{\mathrm{pf}} \frac{1}{x_{sd}} \left( \frac{x_{sd} - x_{sq}}{x_{sq}} \psi_{sd} + \psi_{rd} \right) \psi_{sq} \end{aligned} \qquad (10)$$

Note that due to the saliency of the electrical machine 18, the electromagnetic torque $T_e$ is also a function of the d-component of the stator flux. Recalling that the d-axis of the rotating dq-reference frame is aligned with the rotor flux vector $\psi_r$, the stator flux vector $\psi_s$ may be expressed by $\psi_s = [\|\psi_s\| \cos(\gamma), \|\psi_s\| \sin(\gamma)]^T$.

Then, formula (10) may be written as

$$T_e = \frac{1}{\mathrm{pf}} \frac{1}{x_{sd}} \left( \frac{1}{2} \frac{x_{sd} - x_{sq}}{x_{sq}} \|\psi_s\|^2 \sin(2\gamma) + \Psi_{PM} \|\psi_s\| \sin(\gamma) \right) \qquad (11)$$

where y is the angle between stator and rotor flux vectors $\psi_s$, $\psi_r$.

Optimized pulse patterns (OPPs) relate to a specific pulse width modulation (PWM) method which enables minimization of the harmonic current distortions for a given switching frequency and are well known in the art. Compaed with carrier-based PWM, the use of OPPs results in a lower switching frequency of semiconductor devices of an electrical converter for a given current total harmonic distortion (THD), in a lower current THD for a given switching frequency which implies lower machine losses of the electrical machine, and in lower machine inductances or smaller LC filters during the system design phase as an effect of the ability of OPPs to shape the current harmonic spectrum.

Hence, it can be inferred that the use of OPPs lifts the artificial and unnecessary constraint of a fixed modulation interval imposed in carrier-based PWM when optimizing the system during design and operation.

To enable the use of OPPs in electrical drive systems, the concept of model predictive pulse pattern control (MP³C) has been described in EP 2 469 692 A1. MP³C controls the position of the stator flux vector $\psi_s$ of the electrical machine 18 along an optimal flux trajectory, which is the integral of the OPP voltage waveform over time. It achieves this by manipulating in real time the switching instants of the offline computed OPP, as described in EP 2 891 241 B1.

A control objective of a drive system may be to achieve a regulation of the electrical angular rotor speed $\omega_r$ to the desired reference value $\omega_r^*$. This may be achieved by appropriately adjusting the angle between stator and rotor flux vector $\psi_s$, $\psi_r$ which may be computed by solving a nonlinear trigonometric equation (c.f., (6) and (11)) that depends on the type of the electrical machine 18, machine parameters, and/or the rotor flux vector $\psi_r$, e.g. on its orientation and/or magnitude. The electrical machine 18 may for example be an induction machine or permanent magnet machine. The machine parameters may for example be magnetizing and leakage inductances. However, acquiring knowledge of these quantities is a hard task in several applications, while robustness of the system is hindered by a false estimation of them.

Fig. 6 shows an example of a switching pattern modification by a MP³C as described in the above-mentioned prior art. An inner feedback loop of MP³C is responsible for driving the stator flux vector $\psi_s$ towards the reference stator flux vector $\psi_s^*$. This task may be achieved by a pattern controller module 36 (see figure 7), which may modify switching instants of the OPP to compensate for the difference between the stator flux vector $\psi_s$ and the reference stator flux vector $\psi_s^*$. A resulting pulse pattern may be encoded in a switching signal $u_{abc}$ (see figure 7) and may be used for driving the semiconductor switches of the electrical converter 12 (see figure 7). To illustrate this control principle, a two-level converter with stator flux vector $\psi_s$ in phase a may be given by

$$\psi_{sa}(t) = \psi_{sa}(0) + \int_0^t v_a(\tau)d\tau \tag{12}$$

where $v_a(t) \in \{-V_{dc}/2, V_{dc}/2\}$, with $V_{dc}$ denoting the voltage of a dc-link 16 (see figure 7). Here, it is implicitly assumed that the stator resistance is negligible. It is noted that formula (12) may be used by an observer module 22 to compute the actual stator flux vector $\psi_s$. Let $v_a(0) \in \{-V_{dc}/2, V_{dc}/2\}$ be the voltage output at $t=0$ and assume that a switching transition $\Delta v_a = \{-V_{dc}, V_{dc}\}$ may occur at time $t_a \in (0,t)$. So, the reference stator flux vector $\psi_s^*$ may be given by

$$\psi_{sa}^*(t) = \psi_{sa}(0) + \int_0^{t_a} v_a(0)d\tau + \int_{t_a}^t (v_a(0) + \Delta v_a)d\tau$$
$$= \psi_{sa}(0) + v_a(0)t_a + (v_a(0) + \Delta v_a)(t - t_a). \tag{13}$$

If this switching instant is delayed or forwarded by a time interval $\Delta t_a$, i.e. the switching instant occurs at time $t_a + \Delta t_a$, this results in

$$\psi_{sa}(t) = \psi_{sa}(0) + \int_0^{t_a + \Delta t_a} v_a(0)d\tau + \int_{t_a + \Delta t_a}^t (v_a(0) + \Delta v_a)d\tau \tag{14}$$
$$= \psi_{sa}(0) + v_a(0)(t_a + \Delta t_a) + (v_a(0) + \Delta v_a)(t - t_a - \Delta t_a)$$
$$= \psi_{sa}^*(t) + \Delta v_a \Delta t_a.$$

This implies that

$$\Delta \psi_{sa}(t) = \Delta v_a \Delta t_a. \tag{15}$$

Hence, based on the difference between the measured stator flux vector $\psi_s$ and the reference stator flux vector $\psi_s^*$ the pattern controller 36 may decide whether there is a need to delay or advance the OPP switching instants. Although this section illustrates the basic principle of operation of the pattern controller, the actual implementation may be more complicated, including functionalities such as pulse insertion which may allow for fast control of the stator flux during transients and to achieve disturbance rejection.

Fig. 7 shows an electrical system 10 comprising an electrical converter 12, a DC link 16, an electrical machine 18, and a controller 20. The electrical converter 12 comprises several semiconductor switches (not shown) and interconnects the DC link 16 with the electrical machine 18. The electrical converter 12 may be controlled by the controller 20. The electrical converter 12 may be an inverter. It may be a voltage source or a current source converter 12. In particular, the converter 12 may be a high-power converter adapted for converting current with more than 100 A and/or 1000 V. The electrical machine 18 may be an electric motor or a generator, or it may be operated as an electric motor in a first operation mode and as a generator in a second operation mode.

As explained in the following, the controller 20 embodies a Model-Free Scalar Pulse Pattern Control (MF-SPPC) scheme. The MF-SPPC scheme may be a closed-loop control scheme responsible for regulating a magnitude of a stator flux to its reference value, in particular the reference stator flux magnitude $\Psi_s^*$, during transient events and in the presence of disturbances in a dc-link voltage of the DC link 16. This task may be achieved for a given and/or predetermined reference angular stator frequency $\omega_s^*$ (or speed). By adjusting the reference angular stator frequency $\omega_s^*$, a steady state value of an angular rotor speed may also be adjusted. The MF-SPPC scheme may be seen as a bare bone control scheme based on OPPs which does not rely on any knowledge of the machine type and its parameters to achieve its control objectives. In particular, unlike its MP3C counterpart, MF-SPPC does not rely on any information regarding the machine type and its parameters.

The controller 20 comprises an observer module 22 that may receive an output voltage $v_s$ of the electrical converter 12. The output voltage $v_s$ may be an input for the electrical motor 18 and/or may be measured at corresponding outputs of the electrical converter 12. The ob server module 22 may also receive a DC-link voltage of the DC-link 16 and/or a switching signal $u_{abc}$, in which three-phase switch positions are encoded, to reconstruct the output voltage $v_s$ applied to input terminals of the electrical machine 18, instead of receiving the measured output voltage $v_s$. Based on the measured output voltage $v_s$, the observer module 22 may estimate a stator flux vector $\psi_s$ of the electrical machine 18.

An integration module 38 of the controller 20 may comprise an integrator. The integration module 38 may determine the reference stator angle $\theta_s^*$ by integrating the reference angular stator frequency $\omega_s^*$ with respect to time.

A flux reference module 28 of the controller 20 may determine a reference stator flux vector $\psi_s^*$, which lies on an optimal flux trajectory, and may have a desired angle and a desired magnitude. In particular, the optimal flux trajectory may be obtained by integrating a pre-calculated optimized pulse pattern OPP that is selected by a pattern loader module 32 of the controller 20 based on a modulation index $m$ provided by a modulation index module 30 of the controller 20 and a maximum allowed switching frequency $\hat{f}_{sw}$ of the electrical converter 12. The maximum allowed switching frequency $\hat{f}_{sw}$ of the electrical converter 12 may be determined in advance and may be stored on a memory (not shown) of the controller 20.

The modulation index module 30 may provide at its output the desired modulation index m. The modulation index module 30 may determine the modulation index m depending on the reference angular stator frequency $\omega_s^*$.

The pattern controller module 36 may be a conventional pattern controller module 36, e.g. as described in the above-mentioned prior art. The pattern controller module 36 may provide one, two or more functionalities as described above with respect to figure 6. The pattern controller module 36 may generate the vector of switch positions encoded in the switching signal $u_{abc}$ that may be applied to the converter 12.

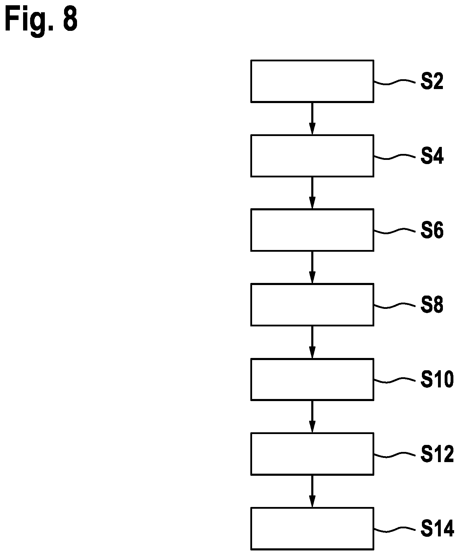

Fig. 8 shows a flow diagram of an exemplary embodiment of a method for controlling the electrical converter 12 for driving the electrical machine 18. The method may be carried out by the controller 20.

In the following, normalized quantities are used and it is focused on a three-phase inverter 12 connected to an electrical machine 18. However, it has to be understood that the following embodiments also may be applied to an inverter connected to a general p-phase load or to a grid-connected converter connected to a power grid, in which the converter may be grid forming by setting the amplitude and frequency of the grid voltage. Additional passive elements, such as filters, transformers and/or cables may be added.

In a step S2, the stator flux vector $\psi_s$ may be estimated depending on at least one measurement in the electrical converter 12, e.g. by the observer 22. The at least one measurement in the electrical converter 12 may comprise measuring the stator voltage $v_s$ of the electrical converter 12. Then, the stator flux vector $\psi_s$ may be estimated depending on the stator voltage $v_s$, e.g. by the above formulas (1) or (9).

In a step S4, the optimized pulse pattern OPP for the electrical converter 12 may be determined, e.g. as described in EP 2 469 692 A1. For example, the optimized pulse pattern OPP may be determined depending on the modulation index m and/or the maximum allowed switching frequency $\hat{f}_{sw}$, e.g. by the pattern loader module 32, wherein the modulation index m may be determined depending on a reference stator flux magnitude $\Psi_s^*$ and/or depending on the reference angular stator frequency $\omega_s^*$. In particular, the optimized pulse pattern OPP may be determined depending on the reference stator flux magnitude $\Psi_s^*$, wherein the fundamental component stator flux vector $\psi_s$ may determine the modulation index m of the optimized pulse pattern OPP.

The optimized pulse pattern OPP may comprise a sequence of switching transitions at switching instants between different switching states of the converter 12. The determined optimized pulse pattern OPP may be loaded from a table of optimized pulse patterns. The table of optimized pulse patterns may be stored in a memory of the controller 20. The table of optimized pulse patterns may be indexed with respect to the modulation index m, and optionally with respect to the maximum allowed switching frequency $\hat{f}_{sw}$. For each optimized pulse pattern OPP in the table, switching transitions at switching instants may be stored.

In a step S6, the reference stator angle $\theta_s^*$ of the stator flux vector $\psi_s$ may be determined depending on the reference angular stator frequency $\omega_s^*$, e.g. by the integration module 38.

In a step S8, the reference flux vector $\psi_s^*$ may be determined depending on the optimized pulse pattern OPP and the reference stator angle $\theta_s^*$, e.g. by the flux reference module 28.

In a step S10, the difference between the reference stator flux vector $\psi_s^*$ and the estimated stator flux vector $\psi_s$, i.e. the stator flux error, may be determined, e.g. by the controller 20.

In a step S12, the switching instants of the optimized pulse pattern OPP may be modified, e.g. by the pattern controller module 36, e.g. such that the stator flux error is minimized, e.g. as explained above and/or described in EP 2 891 241 B1.

In a step S14, at least a part of the modified optimized pulse pattern OPP, e.g. by the switching signal $u_{abc}$, may be applied to the electrical converter 12, e.g. by the pattern controller module 36.

The functional modules may be implemented as programmed software modules or procedures, respectively; however, someone skilled in the art will understand that the functional modules may be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art. The invention is defined by the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 10 | electrical system |
| 12 | electrical converter |
| 16 | DC link |
| 18 | electrical machine (motor or generator) |
| 20 | controller |
| 22 | observer module |
| 28 | flux reference module |
| 30 | modulation index module |
| 32 | pattern loader module |
| 36 | pattern controller module |
| 38 | integration module |
| $v_s$ | stator voltage vector |
| $\psi_s$ | estimated stator flux vector |
| $\psi_s^*$ | reference stator flux vector |
| $\Psi_s^*$ | reference stator flux magnitude |
| $u_{abc}$ | switching signal |
| m | modulation index |
| $\hat{f}_{sw}$ | maximum allowed switching frequency |
| OPP | optimized pulse pattern |
| $\theta_s^*$ | reference stator angle |
| $\omega_s^*$ | reference angular stator frequency |
| S2-S14 | steps two to fourteen |

**Claims**

**1.** A method for controlling an electrical converter (12) for driving an electrical machine (18), the method comprising:

estimating a stator flux vector ($\psi_s$) depending on at least one measurement in the electrical converter (12);
determining an optimized pulse pattern (OPP) for the electrical converter (12) depending on a reference angular stator frequency ( $\omega_s^*$ );

determining a reference stator angle ( $\theta_s^*$ ) of the stator flux vector ($\psi_s$) depending on the reference angular stator frequency ( $\omega_s^*$ );

determining a reference stator flux vector ( $\psi_s^*$ ) depending on the optimized pulse pattern (OPP) and the reference stator angle ( $\theta_s^*$ );

determining a difference between the reference stator flux vector ( $\psi_s^*$ ) and the estimated stator flux vector ($\psi_s$);
modifying switching instants of the optimized pulse pattern (OPP), such that the difference is minimized; and
applying at least a part of the modified optimized pulse pattern (OPP) to the electrical converter (12).

2. The method of claim 1, wherein

the reference stator angle ( $\theta_s^*$ ) is determined by integrating the reference angular stator frequency ( $\omega_s^*$ ).

3. The method of one of claims 1 or 2, wherein

the optimized pulse pattern (OPP) is determined depending on a reference stator flux magnitude ( $\Psi_s^*$ ).

4. The method of claim 3,
the optimized pulse pattern (OPP) is determined depending on a modulation index (m) and/or a maximum allowed switching frequency ($\hat{f}_{sw}$),

wherein the modulation index (m) is determined depending on the reference angular stator frequency ( $\omega_s^*$ ) and/or the reference stator flux magnitude ( $\Psi_s^*$ ).

5. The method of one of the preceding claims,

the at least one measurement in the electrical converter (12) comprises measuring a stator voltage ($v_s$) of the electrical converter (12); and
the stator flux vector ($\psi_s$) is estimated depending on the stator voltage ($v_s$).

6. The method of one of the preceding claims, wherein

the optimized pulse pattern (OPP) comprises a sequence of switching transitions at switching instants between different switching states of the converter (12);
the optimized pulse pattern (OPP) is loaded from a table of optimized pulse patterns stored in a controller (20) performing the method;
the table of optimized pulse patterns is indexed with respect to the modulation index (m);
wherein for each optimized pulse pattern (OPP) in the table, switching transitions at switching instants are stored.

7. A controller (20) for controlling an electrical converter (12) adapted for executing the steps of the method of one of claims 1 to 6.

8. An electrical converter (12), comprising:

a plurality of semiconductor switches;
a controller (20) according to claim 7 adapted for controlling the semiconductor switches of the electrical converter (12).

9. A computer program, which when being executed on a processor cause the electrical converter of claim 8 to execute the steps of the method of one of claims 1 to 6.

10. A computer-readable medium in which a computer program according to claim 9 is stored.

**Patentansprüche**

1. Verfahren zum Steuern eines elektrischen Umrichters (12) zum Antreiben einer elektrischen Maschine (18), wobei das Verfahren Folgendes umfasst:

   Schätzen eines Statorflussvektors ($\Psi_s$) in Abhängigkeit von wenigstens einer Messung in dem elektrischen Umrichter (12);

   Bestimmen eines optimierten Pulsmusters (OPP: Optimized Pulse Pattern) für den elektrischen Umrichter (12) in Abhängigkeit von einer Referenzstatorwinkelfrequenz ($\omega_s^*$);

   Bestimmen eines Referenzstatorwinkels ($\theta_s^*$) des Statorflussvektors ($\Psi_s$) in Abhängigkeit von der Referenzstatorwinkelfrequenz ($\omega_s^*$);

   Bestimmen eines Referenzstatorflussvektors ($\Psi_s^*$) in Abhängigkeit von dem optimierten Pulsmuster (OPP) und dem Referenzstatorwinkel ($\theta_s^*$);

   Bestimmen einer Differenz zwischen dem Referenzstatorflussvektor ($\Psi_s^*$) und dem geschätzten Statorflussvektor ($\Psi_s$);

   Modifizieren von Schaltzeitpunkten des optimierten Pulsmusters (OPP), so dass die Differenz minimiert wird; und

   Anwenden wenigstens eines Teils des modifizierten optimierten Pulsmusters (OPP) auf den elektrischen Umrichter (12).

2. Verfahren nach Anspruch 1, wobei

   der Referenzstatorwinkel ($\theta_s^*$) durch Integrieren der Referenzstatorwinkelfrequenz ($\omega_s^*$) bestimmt wird.

3. Verfahren nach einem der Ansprüche 1 oder 2, wobei das optimierte Pulsmuster (OPP) in Abhängigkeit von einem Referenzstatorflussbetrag ($\Psi_s^*$) bestimmt wird.

4. Verfahren nach Anspruch 3,

   wobei das optimierte Pulsmuster (OPP) in Abhängigkeit von einem Modulationsindex (m) und/oder einer maximal zulässigen Schaltfrequenz ($\hat{f}_{sw}$) bestimmt wird,

   wobei der Modulationsindex (m) in Abhängigkeit von der Referenzstatorwinkelfrequenz ($\omega_s^*$) und/oder dem Referenzstatorflussbetrag ($\Psi_s^*$) bestimmt wird.

5. Verfahren nach einem der vorhergehenden Ansprüche,

   wobei die wenigstens eine Messung in dem elektrischen Umrichter (12) Messen einer Statorspannung ($v_s$) des elektrischen Umrichters (12) umfasst; und

   wobei der Statorflussvektor ($\Psi_s$) in Abhängigkeit von der Statorspannung ($v_s$) geschätzt wird.

6. Verfahren nach einem der vorhergehenden Ansprüche, wobei

   das optimierte Pulsmuster (OPP) eine Sequenz von Schaltübergängen zu Schaltzeitpunkten zwischen unterschiedlichen Schaltzuständen des Umrichters (12) umfasst;

   das optimierte Pulsmuster (OPP) aus einer Tabelle von optimierten Pulsmustern geladen wird, die in einer Steuerung (20) gespeichert wird, die das Verfahren durchführt;

   die Tabelle von optimierten Pulsmustern mit Bezug auf den Modulationsindex (m) indiziert ist;

   wobei für jedes optimierte Pulsmuster (OPP) in der Tabelle Schaltübergänge zu Schaltzeitpunkten gespeichert sind.

7. Steuerung (20) zum Steuern eines elektrischen Umrichters (12), die zum Ausführen der Schritte des Verfahrens nach einem der Ansprüche 1 bis 6 eingerichtet ist.

EP 4 228 143 B1

8. Elektrischer Umrichter (12), der Folgendes umfasst:

mehrere Halbleiterschalter;
eine Steuerung (20) nach Anspruch 7, die zum Steuern der Halbleiterschalter des elektrischen Umrichters (12) eingerichtet ist.

9. Computerprogramm, das, wenn es auf einem Prozessor ausgeführt wird, den elektrischen Umrichter nach Anspruch 8 zum Ausführen der Schritte des Verfahrens nach einem der Ansprüche 1 bis 6 veranlasst.

10. Computerlesbares Medium, in dem ein Computerprogramm nach Anspruch 9 gespeichert ist.

**Revendications**

1. Procédé de commande d'un convertisseur électrique (12) pour entraîner une machine électrique (18), le procédé comprenant :

l'estimation d'un vecteur de flux de stator ($\Psi_s$) en fonction d'au moins une mesure dans le convertisseur électrique (12) ;
la détermination d'un motif d'impulsions optimisées (OPP) pour le convertisseur électrique (12) en fonction d'une fréquence angulaire de stator ( $\omega_s^*$ ) de référence ;
la détermination d'un angle de stator ( $\theta_s^*$ ) de référence du vecteur de flux de stator ($\psi_s$) en fonction de la fréquence de stator angulaire ( $\omega_s^*$ ) de référence ;
la détermination d'un vecteur de flux de stator ( $\Psi_s^*$ ) de référence en fonction du motif d'impulsions optimisées (OPP) et de l'angle de stator ( $\theta_s^*$ ) de référence ;
la détermination d'une différence entre le vecteur de flux de stator ( $\Psi_s^*$ ) de référence et le vecteur de flux de stator estimé ($\Psi_s$) ;
la modification des instants de commutation du motif d'impulsions optimisées (OPP), de telle sorte que la différence est minimisée ; et
l'application d'au moins une partie du motif d'impulsions optimisées (OPP) modifié au convertisseur électrique (12).

2. Procédé selon la revendication 1,

l'angle de stator ( $\theta_s^*$ ) de référence étant déterminé en intégrant la fréquence de stator angulaire ( $\omega_s^*$ ) de référence.

3. Procédé selon l'une des revendications 1 ou 2,

le motif d'impulsions optimisées (OPP) étant déterminé en fonction d'une grandeur de flux de stator ( $\Psi_s^*$ ) de référence.

4. Procédé selon la revendication 3,

le motif d'impulsions optimisées (OPP) est déterminé en fonction d'un indice de modulation (m) et/ou d'une fréquence de commutation maximale autorisée ($\hat{f}_{sw}$),

l'indice de modulation (m) étant déterminé en fonction de la fréquence de stator angulaire ( $\omega_s^*$ ) de référence et/ou de la grandeur de flux de stator ( $\Psi_s^*$ ) de référence.

5. Procédé selon l'une des revendications précédentes,

l'au moins une mesure dans le convertisseur électrique (12) comprend la mesure d'une tension de stator ($v_s$) du convertisseur électrique (12) ; et

13

le vecteur de flux de stator ($\Psi_s$) est estimé en fonction de la tension de stator ($v_s$).

6. Procédé selon l'une des revendications précédentes, le motif d'impulsions optimisées (OPP) comprenant une séquence de transitions de commutation à des instants de commutation entre différents états de commutation du convertisseur (12) ;

le motif d'impulsions optimisées (OPP) étant chargé à partir d'une table de motifs d'impulsions optimisées stockée dans un contrôleur (20) mettant en œuvre le procédé ;
la table des motifs d'impulsions optimisées étant indexée par rapport à l'indice de modulation (m) ;
pour chaque motif d'impulsions optimisées (OPP) dans la table, des transitions de commutation à des instants de commutation étant stockées.

7. Contrôleur (20) pour commander un convertisseur électrique (12) conçu pour réaliser les étapes du procédé selon l'une des revendications 1 à 6.

8. Convertisseur électrique (12), comprenant :

une pluralité de commutateurs à semi-conducteurs ;
un contrôleur (20) selon la revendication 7, conçu pour commander les commutateurs à semi-conducteurs du convertisseur électrique (12).

9. Programme informatique, qui, lorsqu'il est exécuté sur un processeur, amène le convertisseur électrique selon la revendication 8 à exécuter les étapes du procédé selon l'une des revendications 1 à 6.

10. Support lisible par ordinateur dans lequel est stocké un programme informatique selon la revendication 9.

# Fig. 1

# Fig. 2

# Fig. 3

# Fig. 4

# Fig. 5

# Fig. 6

Fig. 7

EP 4 228 143 B1

# Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469692 A1
- US 2020350847 A1

- EP 2891241 B1

**Non-patent literature cited in the description**

- **TOBIAS GEYER et al.** Model Predictive Pulse Pattern Control. *IEEE Transactions on industry applications*, 01 March 2012, vol. 48 (2), ISSN 0093-9994, 663-676

- **NIKOLAOS OIKONOMOU et al.** Model Predictive Pulse Pattern Control for the Five-Level Active Neutral-Point-Clamped Inverter. *IEEE Transactions on industry applications*, 01 November 2013, vol. 49 (6), ISSN 0093-9994, 2583-2592